# EUROPEAN PATENT APPLICATION

(11) **EP 1 915 912 A1**
(43) Date of publication of application: **30.04.2008**
(21) Application number: 06255427.4
(22) Date of filing: 23.10.2006
(51) Int. Cl.: A23L 1/216, A23L 1/305, A23J 1/14, A23J 3/16

(54) **Protein enriched mashed potato product and process**

(71) Applicant: Wruble, Gary Michael, Harbor Beach MI 48441 (US); Mieczewski, Kenneth L., Ankeny IA 50021 (US); Boggard, Richard L., Park Rapids MN 56470 (US); Johnson, Carl Maurice, Grand Forks ND 58201 (US); Merchant, Steven Charles, Spokane WA 99217 (US); Fietzek, Henry Charles, Grand Forks ND 58201 (US); Posey, Jeffery Lane, Thompson ND 58287 (US)
(72) Inventor: Wruble, Gary Michael, Harbor Beach MI 48441 (US); Mieczewski, Kenneth L., Ankeny IA 50021 (US); Boggard, Richard L., Park Rapids MN 56470 (US); Johnson, Carl Maurice, Grand Forks ND 58201 (US); Merchant, Steven Charles, Spokane WA 99217 (US); Fietzek, Henry Charles, Grand Forks ND 58201 (US); Posey, Jeffery Lane, Thompson ND 58287 (US)
(74) Representative: Pingree, Oliver Norman

(57) **Abstract**

This protein enriched mashed potato product and process employs a soybean protein that has had the beany flavors and odors naturally removed while retaining all of the beneficial characteristics normally associated with the soybean. The soy protein is then incorporated completely and evenly into mashed potatoes resulting in a product that has the enhanced protein and other essential nutrient characteristics that are considered to be essential to a healthy diet but normally substantially absent in potatoes and products derived therefrom.

## Description

### IN THE UNITED STATES PATENT AND TRADEMARK OFFICE UTILITY PATENT APPLICATION

### TO WHOM IT MAY CONCERN:

Be it known that I, Gary Michael Wruble of 1 Resort Road, Harbor Beach, Michigan 48441, Kenneth L. Mieczewski of 3404 SW Timbergreen Road, Ankeny, Iowa 50021, Richard L. Boggard of 17358 County 40, Park Rapids, MN 56470, Carl Maurice Johnson of 1511 14^{th} Ave. South, Grand Forks, North Dakota 58201, Steven Charles Merchant of 15617 Temple Road, Spokane, Washington 99217, Henry Charles Fietzek of 2249 South 38^{th} Street, Grand Forks, North Dakota 58201 and Jeffery Lane Posey of 1530 10^{th} Ave. NE, Thompson, North Dakota 58287 have invented an improvement in the:

### PROTEIN ENRICHED MASHED POTATO PRODUCT AND PROCESS

of which the following is a

### BACKGROUND OF THE INVENTION:

The present invention relates to an improvement in the process employed to increase the protein content of processed mashed potato products. More specifically, to a process of incorporating protein derived from whole soybeans that has been produced by a method which reduces the beany flavors and other undesirable characteristics normally associated with the use of soybean products. This process would therefore allow the processed soy protein to be incorporated with mashed potatoes resulting in the finished product having characteristics that are desirable to the western palate.

Soybeans have long been used as a source of protein in many cultures. This is especially true in Southeast Asia where they have been cultivated for well over 5000 years. There are many reasons for this, the first of which is the naturally high content of protein of soybeans which can be up to 48% by weight. The advantages offered by the high protein content of soybeans in these areas is their ability to replace more expensive sources of protein such as meat, fish, and poultry. Thus, the substitution of animal protein with that derived from soybeans allowed these cultures to flourish without incurring the large infrastructure associated with the production of animal protein. This is especially true in poorer rural areas where the small scale cultivation of soybeans could provide the needs of individual farmers.

An additional benefit offered by the use of soybeans and the protein derived therefrom is their versatility and the resulting wide variety of food products that can be produced from them. One of the most common of the traditional products made from soybeans is tofu. Tofu is a cake-like product having a soft cheese-like consistency and is used either as a meat analog or as a stand-alone ingredient in many recipes. Another use for soybeans in these cultures was the production of soy milk which traditionally was used as a cow or goat milk substitute. A still further use was the production of soy sauce and other similar condiments used for the flavoring of other foods.

While these attributes were well known in the orient, the west did not come to see the benefits offered by the cultivation of soybeans until the latter part of the nineteenth century. However, once this knowledge had been gained, it didn't take long to adopt these uses and to add many of their own. One of these was an expansion of the uses of the oil derived from the soybeans and the use of the remnants of the oil removal process as livestock feed. Additionally, there has been a effort to find alternative methods of incorporating protein derived from soybeans into other foodstuffs.

The increase in the interest in soybeans in the west has largely been associated with an increase of health consciousness and the role of diet in common health problems. Soybeans, and the products derived from them, have been shown to have a variety of health benefits. The primary benefit is the amount of protein that the soybean contains. One cup of cooked soybeans contains 57% of the Food and Drug Administration's recommendations for daily nutritional intake.

Soybeans also contain many other ingredients in high concentrations thought to be essential to good health. These beneficial nutrients include 49% of the daily value for iron intake, 41% of the daily value of essential omega-3 fatty acids, and 41% of the daily value for dietary fiber intake. Additionally, a diet high in soybeans or products made from soybeans has been shown to lower the levels of LDL, or so called bad cholesterol, and raise levels of HDL, or so called good cholesterol. Also, a diet high in soybeans or their derivative products has been shown to lower unhealthy blood pressure levels in heart patients due to their high concentrations of isoflavones. Finally, the protein provided by the use of the soybean has been found to be the equal of protein derived from traditional animal sources. The incorporation of soybeans in the diet tends to reduce the discussed risk factors while the traditional western high intake of the animal protein tends to increase them.

Another recent phenomenon associated with the western diet is the tendency to endeavor to reduce the total amount of daily carbohydrate intake. This has resulted in an effort to replace many of the carbohydrates in the average person's diet with protein. One of the western staples, the potato, is significantly affected by this trend as it contains a high concentration of carbohydrates and a very low percentage of protein. As a result, there have been many attempts (mostly unsuccessful) to incorporate supplemental protein in potato products for western consumers. Many of these attempts have employed soybean derived protein but have, as of yet, been unable to overcome the problems of its use with respect to the western palate.

Although interest and use of the soybean has increased in recent years in the west, there are challenges associated with its use. Most of these problems stem from the beany flavor of the soybean and the west's unwillingness to give up meat as the preferred source of protein. Also, the traditional soy products such as tofu and soy milk, while well established in the health food market in the west, are generally unpalatable to the average consumer. As a result of these factors, there has been an effort in the west to incorporate the health benefits offered by the use of soybeans and foodstuff derived therefrom into packaged food products such as mashed potatoes and other similar pre-processed food items.

The incorporation of the benefits offered by soybeans is generally accomplished by the processing of the soybeans in a manner so that the resulting product retains the protein and other desired characteristics while those that are objectionable to the western palate are removed. Generally this involves the elimination of a large percentage of the oil naturally present in the soybean. A common method of accomplishing this is to chemically remove the oils by the use of a solvent such as hexane. While this procedure works well for its intended purpose, it suffers from a severe limitation in the applicable market place. The majority of the interest in soybeans comes from a segment of the market that is concerned about limiting the consumption of chemically processed food and therefore focuses on organic food products. Soybeans or their derivative that have been chemically treated do not qualify as organic and therefore do not fulfill the needs of this growing market.

Another problem with the incorporation of soybean derived protein in processed foodstuffs is the actual levels of the soy protein that may be incorporated without altering their characteristics to the point that they become unpalatable to the western market. In the past, this generally meant that the soy protein levels were kept at relatively low levels to avoid this problem. However, while this technique was partially effective, it limited the benefits offered by a diet high in soy protein and therefore, provided a less than desirable outcome.

An additional problem that has been encountered in the attempts to incorporate soy protein in traditional western foods is the altering of the foods texture as a result of the incorporation of the soy protein. In fact, the alteration of the texture can be dramatic enough to make any resulting product objectionable to the western palate irrespective of the presence of beany flavors. Consequently, there has been a need to find a way to incorporate the benefits offered by the use of soy protein in a manner that avoids these problems.

Thus, from the preceding discussion it can be seen that it would be desirable to produce a method of incorporating soy protein into processed foods such as mashed potatoes in a manner that avoids the problems of introducing the undesirable characteristics of the beany flavor of the soybean and texture alteration.

### SUMMARY OF THE INVENTION:

It is the primary objective of the present invention to provide a method of producing a mashed potato product which incorporates a soybean based protein product allowing for the increasing of the mashed potato's protein and other essential nutrient content in order to enhance its overall nutritional profile.

It is another objective of the present invention to provide a method of producing a mashed potato product incorporating a soybean based protein in a manner that eliminates the beany flavors that are found objectionable to the western palate that are normally associated with soybeans and their derivative products.

It is an additional objective of the present invention to provide such a method of producing a mashed potato product incorporating a soybean based protein will maintain the texture of the original mashed potatoes thereby enhancing the appeal to the general consumer.

It is a further objective of the present invention to provide such a method of producing a high free starch mashed potato product incorporating a soybean based protein that will allow for the incorporation of a relatively high percentage of the soy protein without adversely affecting the overall characteristics of the mashed potato product after having been mixed into a dough, sheeted, cut or stamped, extruded, then fried or baked.

It is a further objective of the present invention to provide such a method of producing a mashed potato product incorporating a soybean based protein that will allow for the incorporation of a relatively high percentage of the soy protein without adversely affecting the overall characteristics of the mashed potato product.

A process in which whole soybeans are processed into a soy protein product, which will in turn be incorporated into pre-processed mashed potatoes, accomplishes these objectives. The purpose of the end product of this process is primarily to increase the protein content in the mashed potato product that is starch based with very low protein content.

The initial step in the production of the soy protein product is the actual selection of the soybeans to be cultivated by the person or organization responsible for the production of the crop. This selection is predicated on the type of soybean that is best suited for the production of the present invention. The desirable characteristics sought for this purpose include a naturally high protein content, the functionality of that protein and the dietary fiber contained in the soybean, and the degree of agronomic potential for the producer. It has been found that the D. F. 222 variety of soybeans is suitable for use with the present invention, but it must also be noted that other varieties may also be used.

The second step in the production of the soy protein product involves the identification and preservation. This portion of the process includes a procedure to ensure that the seeds chosen for cultivation contain no genetically modified organisms (GMO) constituents. Additionally, the producer of the soybean crop is responsible for documenting and verifying the acreage planted, the variety, the location of the specific field, and all the pertinent dates associated with the production of the soybeans. A third party inspector is also involved in these procedures to ensure and verify the integrity of the results and processes involved.

The harvesting of the soybean crop intended for use in the production of the present invention is also closely monitored and controlled. The harvested soybeans are then again subjected to sampling and testing using industry standards prior to their acceptance for processing. The third party is also involved in these procedures by the institution of random screening of the offered results.

Once the soybeans have entered the processing stage by the above-described means, they enter the pre-processing phase of the production of the soy protein product to be incorporated with the present invention. The pre-processing phase of the production operates to remove any extraneous debris, such as rocks, field dust, stems, or other undesirable articles, from the incoming soybean stream. This pre-processing includes a series of selected sized screens that help to separate the soybeans from larger foreign material. An additional step may also involve the use of either positive or negative air pressure for the removal of foreign matter. Lastly, a gravity table may also be employed to clean the soybean stream during the pre-processing stage. Any one or all of these methods can be employed individually or as a sequential process to ensure the purity of a soybean stream prior to further processing.

Once the soybeans have been properly cleaned and are ready for further processing, they are fed into an inline drying apparatus. The inline drying process takes the moisture content of the soybeans from between 13% and 15% in the inbound stream of soybeans to 8% percent in the outbound. This drying process causes the outer hull of the soybeans to shrink and crack. This then allows the hulls to be removed more easily and prepares the soybeans for further processing.

After the drying process is completed, the soybean stream then enters the processing that is central to the production of the soy protein product to be incorporated with the present invention. The initial step in this process is the actual mechanical de-hulling of the individual soybeans. The de-hulling machine further cracks the dried hulls of the soybeans and then removes and diverts them from the soybean stream. This leaves only the cleaned and dried soybeans in the soybean product stream.

From the de-hulling machine, the soybean stream is directed into an extruding machine. The extruding machine employed in this process is the INSTAPRO model 2500 which is a single screw extruding machine common in the industry. While this particular extruding machine has been found to work well in this application, it is possible that others will work equally as well.

The extruding machine acts upon the soybean stream by forcing it through a specific die to produce a mash-like product. The extrusion process also imparts a significant amount of heat to the soybean product which in turn serves to cook the soybean product affecting a number of changes to it that are critical to the production of the soy protein product to be incorporated with the present invention. Also, the heat produced in the extrusion process eliminates the beany flavors and odors of the soybean and increases the digestibility of the soy protein thereby making the product more palatable to western consumers. The heat also provides two additional benefits, the stabilization of the remaining enzymes contained within the soy protein and acts to sterilize the protein thereby eliminating any potential pathogens contained therein.

At the conclusion of the extrusion process, the mash protein stream is directed into an oil expulsion machine. The oil expulsion machine employed in this process is the INSTAPRO expeller model 4500 using standard factory settings and components. While this particular expulsion machine has been found to work well in this application, it is possible that others will work equally as well.

The oil expulsion machine removes a large percentage of the natural oils contained within the soybeans. The result of this is a soy product that is 48% protein and 8% oil. The removal of a large part of the oil further enhances the flavor of the final product as it contains much of the undesirable flavors and odors associated with soybeans and their derivatives. The oil expulsion process also enhances the beneficial stabilization aspect of the extrusion process.

After the oil expulsion process has been completed, the protein stream is directed into a conventional batch cooler which introduces ambient outside air into an interior holding. The soy protein is kept in the cooler until it reaches a temperature of between 100 and 110 degrees Fahrenheit. The cooling process ensures that the characteristics of the soy protein obtained during the preceding operations are maintained in the present invention at the end of production.

The final procedure in the production of the soy protein product to be incorporated with the present invention is the grinding of the soy protein into soy flour. This is accomplished by directing the product stream into a pulverizing type grinder which reduces the particle size of the product stream to a consistent mesh size of 200 to 300. This is done to ensure the integrity of the soy protein during the grinding process. When the grinding process is completed, the soy flour is removed for packaging that is accomplished in a manner so that the product retains its desirable characteristics for the maximum possible time ensuring that it is always fresh at the time it is used for the production of the present invention.

Once the soy protein has been produced by the above described means, it is then ready to be mixed with a mashed potato product to complete the present invention. This is generally accomplished by introducing the soy protein into an auger where a stream of cooked and otherwise prepared potatoes are being transported to drum dryers. The movement of the auger as it transports the mashed potato mixes the two products together. This combines these two ingredients at a percentage of between 10% soy flour on a dry matter basis to 60% soy flour on a dry matter basis, depending on the preferences of the end user. This ratio has been found to produce a finished product with desirable protein content that also avoids the problems of flavor and consistency irregularities normally associated with the use of soy protein. Additionally, the introduction of the soy protein at this stage of the production of the mashed potatoes has been found to be beneficial to the final product. The reason for this is that the incorporation of the soy protein at this point results in a more homogenous mix. This incorporation prevents the stratification and separation of the different bulk densities and granulations that would occur if they were mixed as dry products after the dehydration of the mashed potatoes. After the mixing of the components has been completed, the resulting mixture is then diverted to a single drum drier where the moisture content is lowered to produce the finished product.

An additional part of the invention occurs at this point. Mashed potatoes being dried on a drum dryer require an additive mixture of water and monoglyceride to prevent the finished dry potato sheet from sticking or adhering to the dryer. Because of the oil left in the bean flour, the amount of monoglyceride is either reduced or eliminated depending on the percentage of soybean flour being introduced to the mashed potatoes. Also, because the soy flour is being incorporated dry, it would be logical to assume that water would need to be added in order to make the water content of the incorporated products the same as mashed potatoes. Through research and experimentation, it has been found that the amount of water added must be reduced according to the rate of the soybean flour being introduced.

For a better understanding of the present invention reference should be made to the drawings and the description in which there are illustrated and described preferred embodiments of the present invention.

### DESCRIPTION OF THE DRAWINGS:

FIGURE 1 is a flow chart representation of the processes involved in the production of the present invention illustrating the path that soybeans follow and the proper sequence of the relevant procedures and its incorporation into the production of the mashed potatoes.
FIGURE 2 is a flow chart diagram of the central procedures of the present invention illustrating the type of machinery employed and the sequence of their use.

### DESCRIPTION OF THE PREFERRED EMBODIMENT:

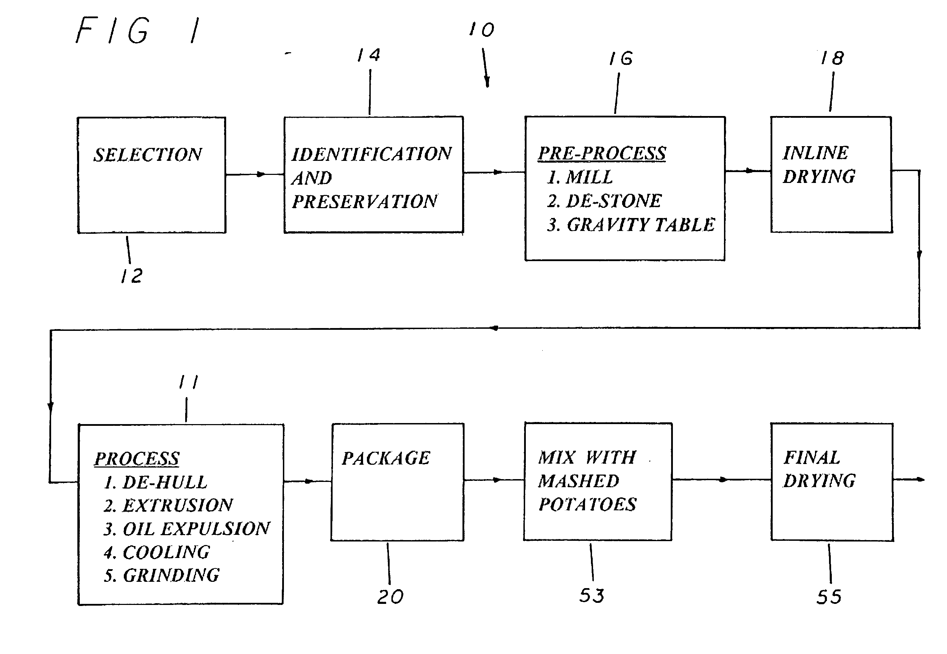

Referring now to the drawings, and more specifically to FIGURE 1, the high protein mashed potato process 10 is produced through a sequence of procedures including the neutrally flavored soy protein 11 production. These are illustrated by the flow chart of the FIGURE that details these procedures and the sequence of their involvement in the production of the present invention.

This procedure begins with a process in which whole soybeans are processed into a soy protein product that will in turn be incorporated into a pre-processed mashed potato product. The purpose of the neutrally flavored soy protein 11 process is to provide a means of increasing the protein content in the mashed potato product which is typically starch based with very low protein content. Additionally, the introduction of the neutrally flavored soy protein 11 into the mashed potato product adds the other benefits associated with a diet high in soybeans such as the lowering of a patient's blood pressure and bad cholesterol levels.

The process involved in the production of the neutrally flavored soy protein 11 begins with the selection of the appropriate soybeans depicted by the box labeled selection 12. The initial step in this process of the present invention is the actual selection of the soybeans to be cultivated by the person or organization responsible for the production of the crop. This selection is predicated on the type of soybean that is best suited for the production of the present invention. The desirable characteristics sought for this purpose include a naturally high protein content, the functionality of that protein and the dietary fiber contained in the soybean, and the degree of agronomic potential for the producer. It has been found that the D. F. 222 variety of soybeans is suitable for use with the present invention, but it must also be noted that other varieties may also be used.

The second step in the production of soy protein employed in the present invention is represented by the box labeled identification and preservation 14 and actually contains procedures that are closely related to the cultivation of the soybean crop. These include a procedure to ensure that the seeds chosen for cultivation contain no genetically modified organisms (GMO) constituents. This is accomplished by the testing of the seeds to verify this purity and the seed handling and planting equipment are thoroughly cleaned to eliminate the possibility of cross contamination with GMO varieties during this process. Additionally, the producer of the soybean crop is responsible for documenting and verifying the acreage planted, the variety, the location of the specific field, and all the pertinent dates associated with the production of the soybeans. Finally, a third party inspector is involved in these procedures to ensure and verify the integrity of the results and process involved.

The harvesting of the soybean crop intended for use in the production of the present invention is also closely controlled. Again, this process involves the careful cleaning of the harvesting and transporting equipment to eliminate the possibility of cross contamination with GMO varieties. The harvested soybeans are then again subjected to sampling and testing using industry standards prior to their acceptance for processing associated with the present invention. The third party is also involved in these procedures by the institution of random screening of the offered results. Thus, during the production of the soybeans employed in the production of the present invention, the origin of virtually every bean is closely monitored to ensure that they are GMO free and/or organic certified.

Once the soybeans have completed the above described procedures, they enter the third stage of the production of the soy protein represented by the box labeled pre-process 16. This stage of the process operates to remove any extraneous debris, such as rocks, field dust, stems, or other undesirable articles, from the incoming soybean stream. This pre-process 16 can be accomplished in any number of ways including a series of selected sized screens that help to separate the soybeans from larger foreign material by allowing the soybeans to fall through. An additional method involves the use of either positive or negative air pressure that removes all the described foreign matter that is lighter than the soybeans themselves.

A gravity table may also be employed to clean the soybean stream during this pre-processing stage. A gravity table is a common cleaning device that employs a sloped surface over which the soybean stream is passed. This sloped surface has a perforated surface that again allows an air stream to pass through it in an upward manner. The sloped surface also oscillates as the soybean stream passes over it ensuring that they will be agitated. As the soybeans and heavy foreign material travels up the surface of the gravity table, the heavier foreign material stays in contact with the sloped surface while the lighter soybeans travel down to a discharge point. The soybeans are then removed from this discharge point and continue towards the production of the present invention. Any one or all of these methods of cleaning the soybean stream can be employed individually or as a sequential process to ensure the purity of a soybean stream prior to further processing.

After the soybeans have been properly cleaned and are ready for further processing, they are fed into a drying apparatus represented by the box labeled inline drying 18. The inline drying apparatus is a device that is common to the industry and operates to remove a portion of the natural moisture from the cleaned soybeans. This drying process takes the moisture content from between 13 and 15% in the inbound stream of soybeans to 8% in the outbound. This drying process causes the outer hull of the soybeans to shrink and crack. The cracking of the hull then allows them to be removed more easily and prepares the soybeans for further processing.

From the dryer, the soybean stream then enters the neutrally flavored soy protein 11 processing that is central to the production of the present invention and represented by the box labeled 11. The central processing phase in the production of the present invention consists of five separate procedures all of which will be described in greater detail below. The first of these is the de-hulling procedure that fully removes the previously cracked hulls of the soybeans. Then second is the extruding procedure that transforms the soybeans into a mash or cake, which is then fed into the third procedure, the expulsion of oil. The oil expulsion procedure mechanically removes much of the natural oils contained in soybean mash which then is transferred to the forth procedure, the cooling of the soybean mash. Finally, from the cooling procedure, the soybean mash then enters the grinding procedure where it is ground into a soybean flour of a predetermined consistency.

The packaging process, represented by the box labeled packaging 20, is accomplished in a manner so that the final product retains its desirable characteristics for the maximum possible time or until it is required for use in the final process involved in the production of the present invention. The preferred method of accomplishing this has been found to be heat-sealing the product in a three-ply plastic bag having a polyurethane interior liner. Typically, the size of these can vary, but a finished weight of twenty kilograms has been found to be effective.

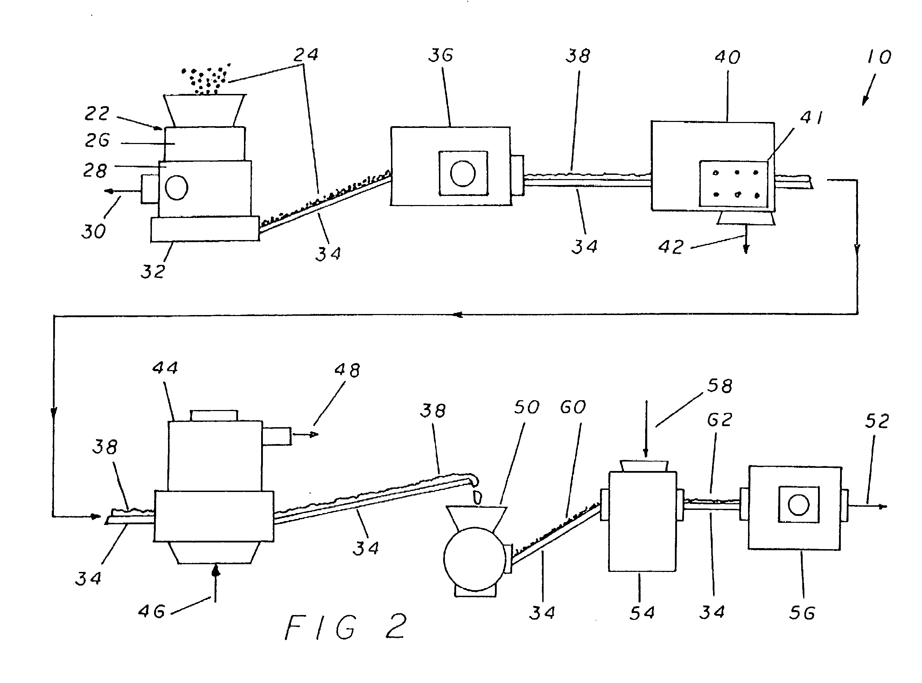

Finally, after the soy protein production is complete, it is then ready to be mixed with the hot mashed potatoes to complete the present invention. This step is referred to as the mixing process represented by the box marked 53. When this operation is complete, the present invention then enters the final drying process represented by the box labeled 55. Additionally, these two processes will also be discussed in greater detail below with reference to FIGURE 2.

As stated previously, those processes that are central to the neutrally flavored soy protein 11 process and the present invention as a whole are further detailed in FIGURE 2. It is important to note that the images contained in this FIGURE are for illustration purposes and are not intended to accurately represent the actual machines employed in the process. The initial procedure in the production of the neutrally flavored soy protein 11 is the actual mechanical de-hulling of the individual soybeans that is begun by feeding soybean stream 24 into a de-hulling machine 22, which then accomplishes the desired result. The de-hulling machine 22 further loosens the dried hulls from the soybeans in its internal de-hulling chamber 26 and they are then fed into the aspirator 28. The aspirator 28 removes the hulls from the soybean stream 24 by use of an air stream that acts upon the lighter hulls with either a positive or negative airflow. The light hulls are easily separated by this technique and are removed from the de-hulling machine 22 at the hull discharger 30 leaving only the cleaned and dried soybean stream 24.

From the collector 32 of the de-hulling machine 22, the soybean stream 24 is directed onto a conveyor 34 that transports it to the extruding machine 36. The extruding machine 36 employed in this process is the INSTAPRO model 2500 which is a single screw extruding machine common in the industry. While this particular extruding machine 36 has been found to work well in this application, it is possible that others will work equally as well.

The extruding machine 36 acts upon the soybean stream 24 by forcing it through a specific die to produce a mash-like product. During the extrusion process, the force and friction placed on the soybean product imparts a significant amount of heat to it. In fact, the temperature of the soybeans rises to between 260 to 280 degrees Fahrenheit that is maintained for a period of 25 to 30 seconds. This rise in temperature is enough to impart significant changes to the important constituents of the soybean product.

The raising of the temperature serves to cook the soybean product affecting a number of changes to it that are critical to the production of the present invention. The first of these is the inactivation of the anti-nutritional Trypsin enzyme. The Trypsin enzyme is a natural constituent of the soybean that has been shown to produce digestive problems in certain people. The amount of heat produced in the extrusion process eliminates this making the resulting present invention more palatable to western consumers.

An additional heat produced alteration during the extrusion process is it increases the digestibility of the soy protein. This allows the human body to effectively absorb the protein thereby increasing the health benefits offered by the present invention. Finally, the heating of the extrusion process has also been shown to flash off the beany and other objectionable flavors and odors. Since the presence of these flavors and odors are the characteristics of the soybean that western consumers find the most objectionable, this result is very desirable in terms of the marketability of the present invention in western markets.

The heat applied during the extrusion process provides two further benefits to the resulting soy protein. The first of these is the stabilization of the remaining enzymes contained within the soy protein. The stabilization of these enzymes helps to enhance the shelf life of the resulting product. Additionally, the heat acts to sterilize the protein stream thereby eliminating any potential pathogens contained within the soy protein such as bacteria, viruses, yeast, and mold. Thus, the extrusion process also ensures the safety of the present invention.

Therefore, the extrusion process employed in the production of the neutrally flavored soy protein 11 produces effects on the nature of the soybean that will allow for the dramatic increase of the inclusion of soy protein in the diet of the average western consumer. Additionally, this method of eliminating the objectionable flavors and odors is a completely natural process avoiding the use of the undesirable chemicals that are normally employed for this purpose. This ensures that the present invention will meet the necessary requirements to be termed as organic further enhancing its marketability to the health conscious consumers of the west.

At the conclusion of the extrusion process, the resulting soybean mash stream 38 is directed by means of a conveyor 34 to an oil expulsion machine 40. The oil expulsion machine 40 used in this process is the INSTAPRO expeller model 4500 using standard factory settings and components. While this particular expulsion machine 40 has been found to work well in this application, it is possible that others will work equally as well.

The oil expulsion machine 40 acts on the soybean mash stream 38 to remove a large percentage of the natural oils contained within it. This is accomplished by passing the soybean mash stream 38 through a high-pressure roller assembly 41 that exerts a tremendous amount of mechanical force on it. The pressure exerted by the roller assembly 41 literally squeezes the oil out of the soybean mash stream 38 removing 66% of the total volume of oil. The result of this is a soy product that is 48% protein and 8% oil. The oil that is removed in this process is then diverted from the system through the oil discharge 42 where it then may be used for other purposes.

The removal of a large part of the oil also further enhances the flavor of the final product as it contains much of the undesirable flavors and odors associated with soybeans and their derivatives. The oil expulsion process also enhances the beneficial stabilization aspect of the extrusion process. The combination of these two processes results in a finished product that has a shelf life of between nine to twelve months, enhancing its potential uses in industry applications.

After the oil expulsion process has been completed, the soybean mash stream 38 is directed into a cooling apparatus known as a batch cooler 44. The batch cooler 44 is a conventional cooling apparatus that introduces ambient outside air into an interior holding chamber within which the soybean mash stream 38 is placed. The outside air is brought into the system through the air intake 46 typically located on the lower side of the batch cooler 44 and is expelled through the air exhaust 48 typically located on the upper side of the batch cooler 44. The soybean mash stream 38 is kept in the batch cooler 44 until it reaches a temperature of between 100 and 110 degrees Fahrenheit. The cooling process ensures that the desirable characteristics of the soybean mash stream 38 obtained during the preceding operations are maintained in the present invention at the end of production.

The final procedure in the neutrally flavored soy protein 11 process is the grinding of the soybean mash stream 38 into soy flour 60. This is accomplished by directing the soybean mash stream 38 into a pulverizing type grinding machine 50 which reduces the particle size of the soybean mash stream 38 to a consistent mesh size of 200 to 300. Additionally, the temperature inside the grinding machine 50 is elevated to a temperature that is 20 degrees Fahrenheit above the outside air. This is done to ensure the integrity of the soy protein during the grinding process. When the grinding process is completed, the soy flour 60 is removed to be subjected to the final production of the present invention.

Once the soy protein has been produced by the above-described means, it is then ready to be mixed with a mashed potato product to complete the present invention. This is generally accomplished by introducing the soy flour 60 into an auger 54 into which a predetermined amount of cooked and otherwise prepared potatoes 58 are being transported. The auger 54 accomplishes both the transporting of the cooked potatoes 58 and the mixing of the soy flour 60 with the cooked potatoes 58. The auger 54 combines these two ingredients at a percentage of between 10% soy flour on a dry matter basis to 60% soy flour on a dry matter basis, depending on the preference of the end user. This ratio has been found to produce a finished product with desirable protein content that also avoids the problems of flavor and consistency irregularities normally associated with the use of soy protein. Additionally, the introduction of the soy protein at this stage of the production of the mashed potatoes has been found to be beneficial to the final product. The reason for this is that the incorporation of the soy protein at this point results in a totally homogenous mixing of the two products that prevents the stratification and separation of products with different bulk densities and granulations that would occur if the two were incorporated as dry products after the dehydration of the mashed potato.

Finally, after the mixing of the components of the present invention has been completed, the resulting potato/protein mix 62 mixture is then diverted to a single drum final drier 56 where the moisture content is lowered to produce the finished product.

An additional part of the invention occurs at this point. Mashed potatoes being dried on a drum dryer require an additive mixture of water and monoglyceride to prevent the finished dry potato from sticking or adhering to the drum dryer. Because of the oil left in the bean flour, the amount of monoglyceride is either reduced or eliminated depending on the percentage of soybean flour being introduced into the mashed potatoes. Also, because the soy flour is being introduced dry, it would be logical to assume that water would need to be added in order to make the water content of the incorporated products the same as the mashed potatoes. Research and experimentation has shown that the amount of water added must be reduced according to the rate of the soybean flour being introduced. With this completed, the present invention is ready for final packaging and distribution.

Although the present invention has been described in considerable detail with reference to certain preferred versions thereof, other versions are possible. Therefore, the spirit and scope of the appended claims should not be limited to the description of the preferred versions contained herein.

## Claims

1. A process for forming a potato product enriched with a mechanically altered soy food ingredient, said process comprising:
providing cleaned and dehulled soybeans;
extruding said cleaned and dehulled soybeans through a die so as to produce a soy mash product wherein the force and friction placed upon said soybeans during said extrusion raises the temperature of said soy mash;
passing said soy mash through a high pressure roller assembly so as to mechanically squeeze and separate a percentage of the oil contained in soybeans out of the soy mash stream;
grinding said soy mash into a soy flour;
providing a stream of a cooked mashed potato product; and
mixing said soy flour with said cooked mashed potato product so as to increase the protein content of said cooked mashed potato product.

2. A process for forming a potato product enriched with a mechanically altered soy food ingredient as in claim 1, wherein said extruding of said soybeans raises the temperature of said soybeans such that said soy mash is at a temperature from 250 degrees Fahrenheit and greater.

3. A process for forming a potato product enriched with a mechanically altered soy food ingredient as in claim 2 wherein said extrusion process imparts sufficient heat to said resulting soy mash so as to substantially inactivate the anti-nutritional Trypsin enzyme in said soy mash.

4. A process for forming a potato product enriched with a mechanically altered soy food ingredient as in claim 3 wherein said high pressure roller assembly removes from 50% or greater of the oil by volume found in said soy mash.

5. A process for forming a potato product enriched with a mechanically altered soy food ingredient as in claim 4 further comprising the step of cooling said soy mash in a batch cooler after removing said oil from said soy mash and prior to grinding said soy mash.

6. A process for forming a potato product enriched with a mechanically altered soy food ingredient as in claim 5 wherein said grinding of said soy mash results in a soy flour with a consistent mesh size from 200 to 300.

7. A process for forming a potato product enriched with a mechanically altered soy food ingredient as in claim 1 wherein the percentage of soy flour added to said cooked mashed potatoes is from 10% to 60% on a dry matter basis.

8. A process for forming a soy food ingredient by mechanically removing a percentage of the natural oil contained in a soybean, said process comprising:
providing cleaned and dehulled soybeans;
extruding said cleaned and dehulled soybeans through a die so as to produce a soy mash product wherein the force and friction placed upon said soybeans during said extrusion raises the temperature of said soy mash;
passing said soy mash through a high pressure roller assembly so as to mechanically squeeze and separate a percentage of the oil contained in soybeans out of the soy mash stream; and
grinding said soy mash into a soy flour.

9. A process for forming a soy food ingredient by mechanically removing a percentage of the natural oil contained in a soybean as in claim 8, wherein said extruding of said soybeans raises the temperature of said soybeans such that said soy mash is at a temperature from 250 degrees Fahrenheit and greater.

10. A process for forming a soy food ingredient by mechanically removing a percentage of the natural oil contained in a soybean as in claim 9 wherein said extrusion process imparts sufficient heat to said resulting soy mash so as to substantially inactivate the anti-nutritional Trypsin enzyme in said soy mash.

11. A process for forming a soy food ingredient by mechanically removing a percentage of the natural oil contained in a soybean as in claim 10 wherein said high pressure roller assembly removes from 50% or greater of the oil by volume found in said soy mash.

12. A process for forming a soy food ingredient by mechanically removing a percentage of the natural oil contained in a soybean as in claim 11 further comprising the step of cooling said soy mash in a batch cooler after removing said oil from said soy mash and prior to grinding said soy mash.

13. A process for forming a soy food ingredient by mechanically removing a percentage of the natural oil contained in a soybean as in claim 12 wherein said grinding of said soy mash results in a soy flour with a consistent mesh size from 200 to 300.

14. A process for forming a food product having a mechanically altered soy food ingredient by mechanically removing a percentage of the natural oil contained in a soybean, said process comprising:
providing cleaned and dehulled soybeans;
extruding said cleaned and dehulled soybeans through a die so as to produce a soy mash product wherein the force and friction placed upon said soybeans during said extrusion raises the temperature of said soy mash to from 260 to 280 degrees Fahrenheit;
passing said soy mash through a high pressure roller assembly so as to mechanically squeeze and separate a percentage of the oil contained in soybeans out of the soy mash stream;
cooling said soy mash in a batch cooler; and
grinding said soy mash into a soy flour.

15. A process for forming a food product having a mechanically altered soy food ingredient by mechanically removing a percentage of the natural oil contained in a soybean as in claim 14 further comprising the step of mixing said soy flour with said cooked mashed potato product so as to increase the protein content of said cooked mashed potato product.

16. A process for forming a food product having a mechanically altered soy food ingredient by mechanically removing a percentage of the natural oil contained in a soybean as in claim 15 wherein the percentage of soy flour added to said cooked mashed potatoes is from 10% to 60% on a dry matter basis.

17. A process for forming a food product having a mechanically altered soy food ingredient by mechanically removing a percentage of the natural oil contained in a soybean as in claim 16 further comprising the step of mixing said soy flour with said cooked mashed potato product so as to increase the protein content of said cooked mashed potato product.

18. A process for forming a food product having a mechanically altered soy food ingredient by mechanically removing a percentage of the natural oil contained in a soybean as in claim 17 wherein the heat imparted to said soy mash by extruding is maintained for a period of from 25 to 30 seconds so as to substantially inactivate the anti-nutritional Trypsin enzyme in said soy mash.

19. A process for forming a food product having a mechanically altered soy food ingredient by mechanically removing a percentage of the natural oil contained in a soybean as in claim 18 wherein said grinding of said soy mash results in a soy flour with a consistent mesh size from 200 to 300.

20. A process for forming a food product having a mechanically altered soy food ingredient by mechanically removing a percentage of the natural oil contained in a soybean as in claim 19 wherein the percentage of soy flour added to said cooked mashed potatoes is from 10% to 60% on a dry matter basis.
